# EUROPEAN PATENT APPLICATION

(11) **EP 3 700 157 A1**
(43) Date of publication of application: **26.08.2020**
(21) Application number: 18878068.8
(22) Date of filing: 16.04.2018
(51) Int. Cl.: H04L 29/04, H04L 5/00, H04W 28/26, H04W 72/04

(54) **COMMUNICATION METHOD AND DEVICE**

(30) Priority: 16.11.2017 CN 201711137375
(71) Applicant: Huawei Technologies Co., Ltd., Longgang District Shenzhen, Guangdong 518129 (CN)
(72) Inventor: CHEN, Shicai, Shenzhen Guangdong 518129 (CN); YIN, Hui, Shenzhen Guangdong 518129 (CN); LI, Ying, Shenzhen Guangdong 518129 (CN)
(74) Representative: Maiwald Patent- und Rechtsanwaltsgesellschaft mbH
(86) International application number: PCT/CN2018/083234
(87) International publication number: WO 2019/095623

(57) **Abstract**

A communication method and a device are provided, to enable a central office device to perform a handshake with a plurality of CPEs. The communication method is applied to a communications network, where the communications network includes a central office device, a user node, and a plurality of CPEs, the central office device is connected to the user node by using a twisted pair, the user node is connected to the plurality of CPEs, at least one of the plurality of CPEs is in a data transmission showtime state, and the at least one CPE in the showtime state communicates with the central office device in a time division multiplexing mode; and the method includes: obtaining, by first CPE, basic configuration information, where the first CPE is one of the plurality of CPEs, and the first CPE is in a silent state; and sending, by the first CPE, a first signal to the central office device, where the first CPE indicates, by using a phase change of at least one symbol included in the first signal, whether the first CPE supports the basic configuration information.

## Description

This application claims priority to Chinese Patent Application No. 201711137375.2, filed with the Chinese Patent Office on November 16, 2017 and entitled "COMMUNICATION METHOD AND DEVICE", which is incorporated herein by reference in its entirety.

### TECHNICAL FIELD

This application relates to the field of communications technologies, and in particular, to a communication method and a device.

### BACKGROUND

Currently, the G.fast project is designed for researches on how to use copper cables to provide last high-speed access in a fiber to the distribution point (fiber to the distribution point, FTTdp) scenario. A goal of the G.fast project is to provide an access rate of more than 500 Mbps within 100 meters. The international telecommunication union-telecommunication standardization sector (international telecommunication union-telecommunication standardization sector, ITU-T) Q4 is now doing technical researches and standardization related to G.fast. The G.fast standard is named G.9701.

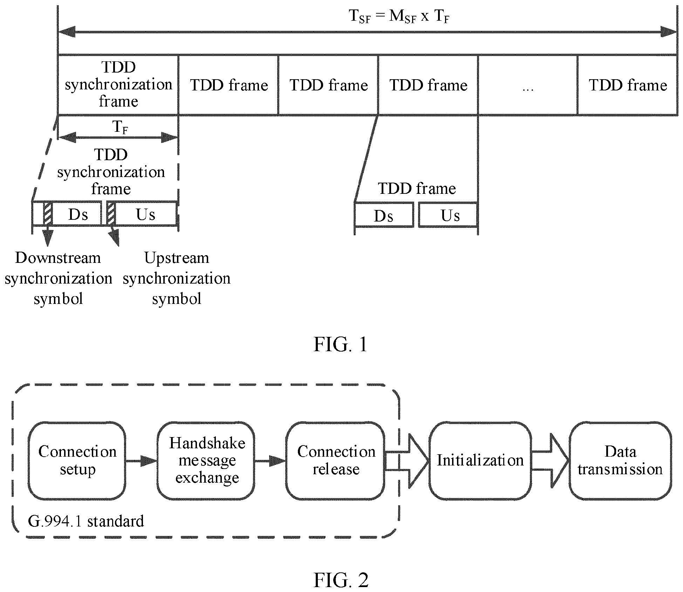

G.fast uses time division duplexing (time division duplexing, TDD) for the upstream and downstream. The TDD is a half-duplex multiplexing mode, in which all subcarriers of an entire frequency band are occupied in both the upstream and downstream but different slots are allocated by a system. In a same slot, a transceiver at one end can only perform sending or receiving, while a transceiver at a peer end can only perform an opposite operation. Currently, a superframe (super frame) structure shown in FIG. 1 is used in the G.fast standard. One superframe includes a plurality of TDD frames. The first frame in the superframe is a TDD synchronization frame (sync frame), and the TDD synchronization frame includes a downstream synchronization symbol (DS sync symbol) and an upstream synchronization symbol (US sync symbol). Lengths of the TDD synchronization frame and the TDD frame each are *T_{F},* and a total quantity of TDD frames plus the TDD synchronization frame included in one superframe is *M_{SF}*. Therefore, a length *T_{SF}* of one superframe may be calculated based on the following formula: *T_{SF}* = *M_{SF}* × *T_{F}.* In FIG. 1, Ds represents downstream transmission, and Us represents upstream transmission.

To provide higher rates for users, ITU approved the G.mgfast standard project in June 2017. In a framework of the G.mgfast standard, an operator proposes a point-to-multipoint (point-to-multipoint, P2MP) architecture for a twisted pair network. In the P2MP network architecture, telephone lines (twisted pairs) connect one port of a central office (CO) device and a plurality of customer premises equipments (CPE), and the CPEs access the network by communicating with the CO device. The CPE may also be referred to as customer premises equipment (customer premise equipment).

Currently, the G.994.1 standard specifies a handshake procedure between CPE and a central office device. However, the G.994.1 standard supports only a point-to-point (point-to-point, P2P) mode, and a receiving party and a sending party exchange messages in a frequency division multiplexing mode. Therefore, in the G.994.1 standard, one port of the central office device performs a handshake with only one CPE. However, in a P2MP mode, the central office device may be connected to a plurality of CPEs. If one port of the central office device performs a handshake with only one CPE, a plurality of CPEs cannot access the central office device.

### SUMMARY

A communication method and a device are provided, to enable a central office device to perform a handshake with a plurality of CPEs.

According to a first aspect, a communication method is provided, where the method may be applied to a communications network, the communications network includes the central office device, a user node, and a plurality of CPEs, the central office device is connected to the user node by using a twisted pair, the user node is connected to the plurality of CPEs, at least one of the plurality of CPEs is in a showtime state, and the at least one CPE in the showtime state communicates with the central office device in a time division multiplexing mode. The method is performed by first CPE in the plurality of CPEs, where the first CPE may be CPE in the plurality of CPEs that is not in the showtime state. The method includes: obtaining, by the first CPE, basic configuration information, where the first CPE is one of the plurality of CPEs, and the first CPE is in a silent state; and sending, by the first CPE, a first signal to the central office device, where the first CPE indicates, by using a phase change of at least one symbol included in the first signal, whether the first CPE supports the basic configuration information. Correspondingly, according to a second aspect, a communication method is provided, where the method may be applied to a communications network, the communications network includes a central office device, a user node, and a plurality of CPEs, the central office device is connected to the user node by using a twisted pair, the user node is connected to the plurality of CPEs, the plurality of CPEs communicate with the central office device in a time division multiplexing mode, and the central office device is in a showtime state. The method may be performed by the central office device. The method includes: receiving, by the central office device, a first signal from first CPE, where a phase change of at least one symbol included in the first signal indicates whether the first CPE supports basic configuration information, and the first CPE is CPE in the plurality of CPEs that requests to go online.

In this embodiment of this application, the central office device is connected to the plurality of CPEs by using the user node, at least one of the plurality of CPEs is in a communication state with the central office device, and the CPE may communicate with the central office device in the time division multiplexing mode. Therefore, the first CPE may further send the first signal to the central office device, and it is equivalent that the first CPE requests to perform a handshake with the central office device. In other words, the central office device can communicate with the plurality of CPEs in the time division multiplexing mode This avoids a case in which the central office device can perform a handshake with only one CPE, so that all of the plurality of CPEs can access the central office device and access the network, and connection requirements of the CPEs are met.

In a possible design, when a phase of the at least one symbol included in the first signal is changed in a first manner, the first signal is used to indicate that the first CPE supports the basic configuration information, and is used to indicate that the first CPE requests to enter an initialization phase; or when a phase of the at least one symbol included in the first signal is changed in a second manner, the first signal is used to indicate that the first CPE does not support the basic configuration information, and is used to indicate that the first CPE requests to enter a handshake phase.

The first signal indicates, by using the phase change of the at least one symbol included in the first signal, whether the first CPE supports the basic configuration information. Therefore, the first signal may indicate that the CPE supports the basic configuration information, or that the CPE does not support the basic configuration information. In this embodiment of this application, the phase of the at least one symbol included in the first signal may be changed in different manners, and the different manners indicates different cases. Therefore, after receiving the first signal, the central office device may determine, based on a manner in which the phase of the at least one symbol included in the first signal is changed, that the first signal indicates that the first CPE supports the basic configuration information or that the first CPE does not support the basic configuration information. This manner is straightforward.

In a possible design, when the phase of the at least one symbol included in the first signal is changed in the first manner, the first CPE performs information exchange in the initialization phase with the central office device in a first time division multiplexing time unit; or when the phase of the at least one symbol included in the first signal is changed in the second manner, the first CPE performs information exchange in the handshake phase with the central office device in a second time division multiplexing time unit. Correspondingly, when the phase of the at least one symbol included in the first signal is changed in the first manner, the central office device performs the information exchange in the initialization phase with the first CPE in the first time division multiplexing time unit; or when the phase of the at least one symbol included in the first signal is changed in the second manner, the central office device performs the information exchange in the handshake phase with the first CPE in the second time division multiplexing time unit.

Based on different content indicated by the first signal, the central office device may perform different interaction processes with the first CPE based on a request of the first CPE, to implement communication between the central office device and the first CPE.

The first time division multiplexing time unit may be a time division multiplexing time unit that does not include a reserved time period. Alternatively, the first time division multiplexing time unit may be a time division multiplexing time unit that includes a reserved time period, and the reserved time period in the first time division multiplexing time unit occupies only a part of an upstream data transmission time period in the first time division multiplexing time unit. When the central office device performs the information exchange in the initialization phase with the first CPE in the first time division multiplexing time unit, the exchange is performed in the rest, not set as the reserved time period, of the upstream data transmission time period in the first time division multiplexing time unit.

The second time division multiplexing time unit may be a time division multiplexing time unit that does not include a reserved time period. Alternatively, the second time division multiplexing time unit may be a time division multiplexing time unit that includes a reserved time period, and the reserved time period in the second time division multiplexing time unit occupies only a part of an upstream data transmission time period in the second time division multiplexing time unit. When the central office device performs the information exchange in the handshake phase with the first CPE in the second time division multiplexing time unit, the exchange is performed in the rest, not set as the reserved time period, of the upstream data transmission time period in the second time division multiplexing time unit.

In a possible design, the first CPE receives a first broadcast message from the central office device, where the first broadcast message is used to indicate the first time division multiplexing time unit or the second time division multiplexing time unit. Correspondingly, the central office device sends the first broadcast message, where the first broadcast message is used to indicate the first time division multiplexing time unit or the second time division multiplexing time unit. To enable the first CPE to interact with the central office device in the first time division multiplexing time unit, the central office device first needs to notify the first CPE. For example, the central office device may send a first broadcast message, and the first CPE may receive the first broadcast message, where the first broadcast message is used to indicate the first time division multiplexing time unit, for example, indicate information such as a position of the first time division multiplexing time unit. In this case, the first CPE may determine the first time division multiplexing time unit based on the first broadcast message, to perform the information exchange in the initialization phase with the central office device in the first time division multiplexing time unit.

To enable the first CPE to interact with the central office device in the second time division multiplexing time unit, the central office device first needs to notify the first CPE. For example, the central office device may send a first broadcast message, and the first CPE may receive the first broadcast message, where the first broadcast message is used to indicate the second time division multiplexing time unit, for example, indicate information such as a position of the second time division multiplexing time unit. In this case, the first CPE may determine the second time division multiplexing time unit based on the first broadcast message, to perform the information exchange in the handshake phase with the central office device in the second time division multiplexing time unit. In other words, the first broadcast message in this embodiment of this application may be used to indicate the first time division multiplexing time unit or the second time division multiplexing time unit.

In a possible design, the sending, by the first CPE, a first signal to the central office device includes but is not limited to the following three manners: sending, by the first CPE, the first signal to the central office device on a first subcarrier, where the first subcarrier is a subcarrier reserved for interaction between a CPE and the central office device in the time division multiplexing mode; or sending, by the first CPE, the first signal to the central office device on a first subcarrier in a reserved time period, where the first subcarrier is a subcarrier reserved for interaction between a CPE and the central office device in the time division multiplexing mode; or sending, by the first CPE, the first signal to the central office device on a second subcarrier in a reserved time period, where the second subcarrier is a subcarrier reserved for a handshake between a CPE and the central office device in a frequency division multiplexing mode. Correspondingly, the receiving, by the central office device, a first signal from first CPE includes but is not limited to the following three manners: receiving, by the central office device, the first signal from the central office device on the first subcarrier, where the first subcarrier is the subcarrier reserved for the interaction between the CPE and the central office device in the time division multiplexing mode; or receiving, by the central office device, the first signal from the first CPE on the first subcarrier in the reserved time period, where the first subcarrier is the subcarrier reserved for the interaction between the CPE and the central office device in the time division multiplexing mode; or receiving, by the central office device, the first signal from the first CPE on the second subcarrier in the reserved time period, where the second subcarrier is the subcarrier reserved for the handshake between the CPE and the central office device in the frequency division multiplexing mode. A receiving manner of the central office device corresponds to a sending manner of the first CPE.

If the first signal in this embodiment of this application is sent by using a same subcarrier as the G.994.1 standard, a used subcarrier spacing of the first signal is 4.3125 kHz. However, a subcarrier spacing of a signal in a showtime phase is not 4.3125 kHz. The first signal and the signal in the showtime phase are mixed, causing a reception difficulty to the central office device. Therefore, the signals need to be separately sent in different times, so that the central office device can detect the signals. Therefore, in this embodiment of this application, the first CPE may send the first signal to the central office device on the second subcarrier in the reserved time period, where the reserved time period may be a time period specially reserved for the handshake in a P2MP mode between the CPE and the central office device. The reserved time period may include a subset of an upstream data transmission time period in at least one time division multiplexing time unit. In other words, the reserved time period may include a part or all of the upstream data transmission time period in the at least one time division multiplexing time unit. The first CPE occupies the second subcarrier in the reserved time period to send the first signal to the central office device. Therefore, a conflict between the first signal and a signal in P2P can be avoided. In addition, a subcarrier specified in the G.994.1 standard can be reused, and there is no need to additionally define a new subcarrier, so that resource utilization can be improved.

Alternatively, the first CPE may send the first signal to the central office device on the first subcarrier, where the first subcarrier is the subcarrier reserved for the interaction between the CPE and the central office device in the time division multiplexing mode. Transmission on the first subcarrier can avoid a conflict with a signal in P2P. Therefore, when the first subcarrier is used to send the first signal, the first CPE may choose to send the first signal in a reserved time period. In this case, the central office device may listen to the first subcarrier in only the reserved time period. This reduces power consumption. Alternatively, the first CPE may send the first signal in any time, which is relatively flexible.

In a possible design, the reserved time period includes a subset of an upstream data transmission time period in at least one time division multiplexing time unit.

For example, parts of upstream data transmission time periods in all time division multiplexing time units may be reserved as reserved time periods. Reserved time periods are set in all time division multiplexing time units. This avoids a case in which the CPE cannot send the first signal because the CPE cannot learn in time a specific time division multiplexing time unit in which a reserved time period is located, and improves a success rate of sending the first signal by the CPE. In addition, when a part of the upstream data transmission time period in the time division multiplexing time unit is set as the reserved time period, the rest of the upstream data transmission time period may still be used to send upstream data, to ensure normal sending of the upstream data.

Alternatively, parts of upstream data transmission time periods in some time division multiplexing time units may be reserved as reserved time periods. Reserved time periods are set in some time division multiplexing time units. This can not only ensure that the CPE can send the first signal to the central office device, but also ensure a normal exchange process of other information.

Alternatively, upstream data transmission time periods in some time division multiplexing time units are used as reserved time periods. This manner is more applicable to a case in which a service is not busy or a time for sending a connection setup signal is required to be relatively long.

Specifically, how to set the reserved time period may be specified in a protocol, or may be determined by a base station.

In a possible design, the first CPE receives a second broadcast message from the central office device, where the second broadcast message is used to indicate the reserved time period. Correspondingly, the central office device sends the second broadcast message, where the second broadcast message is used to indicate the reserved time period.

The reserved time period may occur regularly or may be randomly specified by the central office device based on a current service. If the reserved time period occurs regularly, the reserved time period may be specified in the protocol or may be notified by the central office device; or if the reserved time period is randomly specified by the central office device based on the current service, the reserved time period is notified by the central office device. When the reserved time period is notified by the central office device, the central office device may send a second broadcast message over a broadcast channel, and a to-go-online CPE receives the second broadcast message, where the second broadcast message is used to indicate a reserved time period. After receiving the second broadcast message, the to-go-online CPE may determine information such as specific time division multiplexing time units in which reserved time periods are located and positions of the reserved time periods in the time division multiplexing time units.

In a possible design, the obtaining, by the first CPE, basic configuration information includes but is not limited to the following two manners: receiving, by the first CPE, a third broadcast message from the central office device, where the third broadcast message is used to indicate the basic configuration information; or querying, by the first CPE, the basic configuration information that is stored. Correspondingly, if the first CPE obtains the basic configuration information by using the third broadcast message, the central office device still sends the third broadcast message, where the third broadcast message is used to indicate the basic configuration information.

The basic configuration information may be defined in the protocol. In this case, the basic configuration information may be pre-stored in a terminal device, and the first CPE may obtain the basic configuration information through querying. This reduces a process of interaction between the CPE and the central office device. Alternatively, the basic configuration information may be sent by the central office device. In this case, the CPE does not need to store much information. This helps save storage space of the CPE.

According to a third aspect, CPE is provided. The CPE has functions of implementing the first CPE in the foregoing method designs. These functions may be implemented by hardware, or may be implemented by hardware executing corresponding software. The hardware or the software includes one or more units corresponding to the foregoing functions.

In a possible design, a specific structure of the CPE may include a processor and a transceiver. The processor and the transceiver may perform corresponding functions in the method according to the first aspect or any possible design of the first aspect.

According to a fourth aspect, a central office device is provided. The central office device has functions of implementing the central office device in the foregoing method designs. These functions may be implemented by hardware, or may be implemented by hardware executing corresponding software. The hardware or the software includes one or more units corresponding to the foregoing functions.

In a possible design, a specific structure of the central office device may include a processor and a transceiver. The processor and the transceiver may perform corresponding functions in the method according to the second aspect or any possible design of the second aspect. According to a fifth aspect, CPE is provided. The CPE has functions of implementing the first CPE in the foregoing method designs. These functions may be implemented by hardware, or may be implemented by hardware executing corresponding software. The hardware or the software includes one or more units corresponding to the foregoing functions.

In a possible design, a specific structure of the CPE may include a processing module and a transceiver module. The processing module and the transceiver module may perform corresponding functions in the method according to the first aspect or any possible design of the first aspect.

According to a sixth aspect, a central office device is provided. The central office device has functions of implementing the central office device in the foregoing method designs. These functions may be implemented by hardware, or may be implemented by hardware executing corresponding software. The hardware or the software includes one or more units corresponding to the foregoing functions.

In a possible design, a specific structure of the central office device may include a processing module and a transceiver module. The processing module and the transceiver module may perform corresponding functions in the method according to the second aspect or any possible design of the second aspect.

According to a seventh aspect, a communications apparatus is provided. The communications apparatus may be the first CPE in the foregoing method designs, or may be a chip disposed in the first CPE. The communications apparatus includes: a memory, configured to store computer-executable program code; and a processor, where the processor is coupled to the memory. The program code stored in the memory includes an instruction. When the processor executes the instruction, the communications apparatus is enabled to perform the method performed by the first CPE according to the first aspect or any possible design of the first aspect.

According to an eighth aspect, a communications apparatus is provided. The communications apparatus may be the central office device in the foregoing method designs, or may be a chip disposed in the central office device. The communications apparatus includes: a memory, configured to store computer-executable program code; and a processor, where the processor is coupled to the memory. The program code stored in the memory includes an instruction. When the processor executes the instruction, the communications apparatus is enabled to perform the method performed by the central office device according to the second aspect or any possible design of the second aspect.

According to a ninth aspect, a communications system is provided. The communications system and the communications network in the first aspect or the second aspect may be construed as a same concept. The communications system includes a central office device, a user node, and a plurality of CPEs. The central office device is connected to the user node by using a twisted pair, the user node is connected to the plurality of CPEs, at least one of the plurality of CPEs is in a showtime state, the at least one CPE in the showtime state communicates with the central office device in a time division multiplexing mode, and the central office device is in the showtime state. First CPE is configured to obtain basic configuration information and send a first signal to the central office device, the first CPE indicates, by using a phase change of at least one symbol included in the first signal, whether the first CPE supports the basic configuration information, the first CPE is one of the plurality of CPEs, and the first CPE is in a silent state. The central office device is configured to receive the first signal from the first CPE.

According to a tenth aspect, a computer storage medium is provided. The computer-readable storage medium stores an instruction, and when the instruction is run on a computer, the computer is enabled to perform the method according to the first aspect or any possible design of the first aspect.

According to an eleventh aspect, a computer storage medium is provided. The computer-readable storage medium stores an instruction, and when the instruction is run on a computer, the computer is enabled to perform the method according to the second aspect or any possible design of the second aspect.

According to a twelfth aspect, a computer program product including an instruction is provided.

The computer program product stores the instruction, and when the computer program product runs on a computer, the computer is enabled to perform the method according to the first aspect or any possible design of the first aspect.

According to a thirteenth aspect, a computer program product including an instruction is provided. The computer program product stores the instruction, and when the computer program product runs on a computer, the computer is enabled to perform the method according to the second aspect or any possible design of the second aspect.

In the embodiments of this application, the central office device can communicate with the plurality of CPEs in a time division multiplexing mode, so that the central office device can communicate with the plurality of CPEs. This avoids a case in which the central office device can perform a handshake with only one CPE, so that all of the plurality of CPEs can access the central office device and access the network, and connection requirements of the CPEs are met.

### BRIEF DESCRIPTION OF DRAWINGS

FIG. 1 is a schematic diagram of a superframe structure used in a G.fast standard;
FIG. 2 shows a process, specified in the G.994.1 standard, of interaction between a central office device and CPE;
FIG. 3 is a schematic diagram of an application scenario of a P2MP network according to an embodiment of this application;
FIG. 4 is a flowchart of a communication method according to an embodiment of this application;
FIG. 5A to FIG. 5C are schematic diagrams of several cases of a reserved time period according to an embodiment of this application;
FIG. 6 is a schematic structural diagram of first CPE according to an embodiment of this application;
FIG. 7 is a schematic structural diagram of a central office device according to an embodiment of this application; and
FIG. 8A to FIG. 8B are two schematic structural diagrams of a communications apparatus according to an embodiment of this application.

### DESCRIPTION OF EMBODIMENTS

To make the objectives, technical solutions, and advantages of the embodiments of the present invention clearer, the following further describes the embodiments of the present invention in detail with reference to the accompanying drawings.

The following describes some terms in the embodiments of this application, to facilitate understanding of a person skilled in the art.
(1) CPE: Customer premises equipment CPE is usually deployed in a family that uses a twisted pair for access, and is configured to provide integrated access of services of a home user, such as a wired broadband service, an internet protocol television (internet protocol television, IPTV) service, and a voice over internet protocol (voice over internet protocol, VoIP) service. The CPE implements a connection between an access network and user equipment.
(2) CO: CO represents a central office device. In a P2MP scenario, the central office device may be connected to a plurality of CPEs by using a user node, to provide a network access service for the plurality of CPEs.
(3) The terms "system" and "network" may be used interchangeably in the embodiments of this application. The term "a plurality of' means two or more than two. In view of this, "a plurality of' can be understood as "at least two" in the embodiments of this application. The term "and/or" describes an association relationship for describing associated objects and represents that three relationships may exist. For example, A and/or B may represent the following three cases: Only A exists, both A and B exist, and only B exists. In addition, the character "/", unless otherwise specified, generally indicates an "or" relationship between the associated objects.

In addition, unless otherwise stated, ordinal numbers, such as "first" and "second", mentioned in the embodiments of this application are used for distinguishing a plurality of objects without limiting a sequence, a time sequence, priorities, or importance levels of the plurality of objects. The foregoing describes some concepts included in the embodiments of this application, and the following describes the technical background of the embodiments of this application. FTTH (fiber to the home, fiber to the home) technologies represented by a PON can meet growing expectations for an access network rate in terms of bandwidth. However, it is difficult to overcome limitations in aspects such as investment costs, deployment and O&M, and stability. Particularly, construction costs of fiber to the home are prohibitive, and full lifecycle costs fall far short of expectations of operators. Copper access technologies such as digital subscriber line (digital subscriber line, DSL) technologies have significant advantages in aspects such as investment and O&M. The operators expect to provide broadband access services that meet user requirements in the next one or two decades or longer, while protecting and utilizing existing copper cable investments.

To meet a requirement for a higher rate in the medium and long term, ITU-T has approved the G.fast project on how to use copper cables to provide last high-speed access in an FTTdp scenario. A goal of the G.fast project is to provide an access rate of more than 500 Mbps within 100 meters. ITU-T Q4 is now doing technical researches and standardization related to G.fast. The G.fast standard is named G.9701.

G.fast uses TDD for the upstream and downstream. The TDD is a half-duplex multiplexing mode, in which all subcarriers of an entire frequency band are occupied in both the upstream and downstream but different slots are allocated by a system. In a same slot, a transceiver at one end can only perform sending or receiving, while a transceiver at a peer end can only perform an opposite operation. Currently, a superframe structure shown in FIG. 1 is used in the G.fast standard. One superframe includes a plurality of TDD frames. The first frame in the superframe is a TDD synchronization frame, and the TDD synchronization frame includes a downstream synchronization symbol and an upstream synchronization symbol.

To provide higher rates for users, ITU approved the G.mgfast standard project in June 2017. In a framework of the G.mgfast standard, an operator proposes a P2MP architecture for a twisted pair network. In the P2MP network architecture, telephone lines (twisted pairs) connect one port of a central office device and a plurality of CPEs, and the CPEs access the network by communicating with the central office device.

Currently, the G.994.1 standard specifies a handshake procedure between CPE and a CO device. In the G.994.1 standard, the handshake is a process in which the CO device and the CPE exchange information about transmission modes and select a transmission mode by exchanging specific messages. The G.994.1 standard also specifies a process of connection setup before the handshake and a process of connection release after the handshake. A purpose of the connection setup is to determine that a sending device and a receiving device are ready for handshake message exchange. A purpose of the connection release is to end a handshake (handshake) phase and enter an initialization phase or restore to an initial state. For a process of each phase in the G.994.1 standard, refer to FIG. 2. Before the message exchange, the central office device needs to determine that the CPE is ready for message exchange, and the CPE needs to determine that the central office device is ready for message exchange. This determining process is referred to as the connection setup. The two devices can exchange messages only after a connection is set up. When the handshake between the two devices is completed, the connection needs to be released to end a handshake message exchange phase and enter the initialization (initialization) phase and a data transmission (showtime) phase. When an exception occurs during the handshake, the connection needs to be released to end the handshake message exchange phase and restore to the initial state.

The existing G.994.1 standard supports only a P2P mode. In other words, one port of the central office device performs a handshake with only one CPE. To be specific, before the CPE sends a handshake request, the port of the central office device is in a silent state, and the central office device does not send any signal through this port. In a P2MP mode, it is very likely that before one CPE sends a handshake request, the central office device is already in a showtime phase of signal transmission with another CPE. This case occurs when, for example, one CPE on a G.mgfast line is already online and a new CPE requests to go online. The G.994.1 standard does not support a process of a handshake performed when the central office device is in the showtime phase. In other words, in the P2MP mode, the central office device may be connected to a plurality of CPEs. If one port of the central office device performs a handshake with only one CPE, a plurality of CPEs cannot access the central office device.

In view of this, in the technical solutions provided in the embodiments of this application, the central office device can communicate with the plurality of CPEs in a time division multiplexing mode. This avoids a case in which the central office device can perform a handshake with only one CPE, so that all of the plurality of CPEs can access the central office device and access the network, and connection requirements of the CPEs are met.

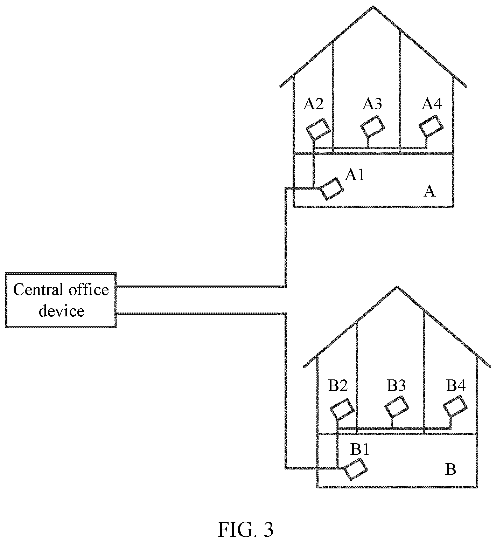

FIG. 3 is a schematic diagram of a P2MP network and shows an application scenario according to an embodiment of this application. A telephone line (twisted pair) connects one port of a central office device to a user node, and the user node is connected to a plurality of CPEs. For example, a telephone line interface may be disposed in each room in a newly-built house. With the interface, one CPE may be connected in each room. In FIG. 3, there are two families: a family A and a family B. The family A has four telephone line interfaces, which may be used to connect to four CPEs: CPE A1, CPE A2, CPE A3, and CPE A4. The family B also has four telephone line interfaces, which may be used to connect to four CPEs: CPE B1, CPE B2, CPE B3, and CPE B4. A quantity of families and a quantity of CPEs in each family in FIG. 3 are merely examples. A quantity of CPEs owned by a family and a quantity of CPEs that can be connected to a central office device are not limited in this application. In other words, a quantity of central office devices included in a communications network and a quantity of CPEs included in the communications network are not limited.

The embodiments of this application are applicable to a P2MP network or another similar wired communications system, for example, a cable (cable) television network system. The P2MP network is used as an example for description in this specification.

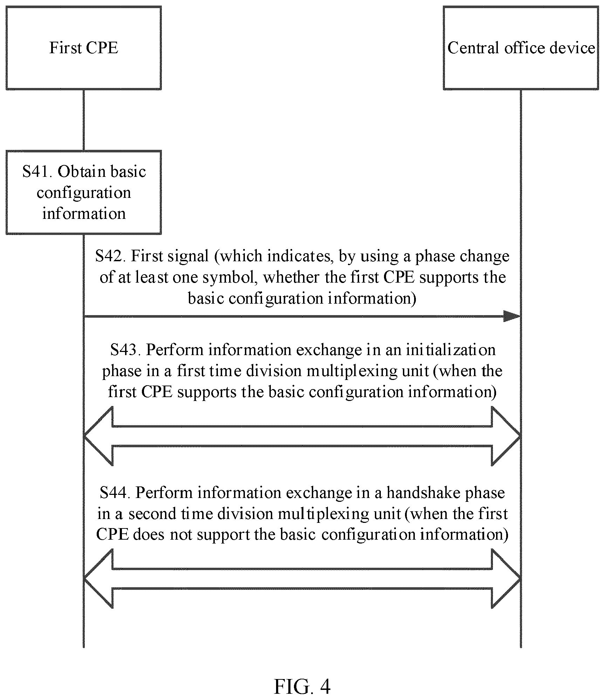

The following describes the technical solutions provided in the embodiments of this application with reference to the accompanying drawings. An example in which the technical solutions provided in the embodiments of this application are applied to the application scenario shown in FIG. 3 is used in the following description. In other words, the P2MP network shown in FIG. 3 is used as an example of a communications network. In addition, in the embodiments of this application, at least one of a plurality of CPEs connected to a central office device is in a showtime state. In other words, the central office device is also in the showtime state, and the at least one CPE in the showtime state communicates with the central office device in a time division multiplexing mode. Certainly, in actual application, this is not limited thereto. FIG. 4 shows a communication method according to an embodiment of this application. A procedure of the method is described as follows:
S41. First CPE obtains basic configuration information, where the first CPE is one of a plurality of CPEs connected to a central office device, and the first CPE is in a silent (silent) state.

In this case, the first CPE is not the foregoing CPE in the showtime state, but is to-go-online CPE. The to-go-online CPE may be understood as follows: The CO device is connected to the plurality of CPEs. In CPEs that are in the silent state, some or all of the CPEs are waiting for or are ready for a handshake with the CO device. In this case, these CPEs are to-go-online CPEs, and the first CPE is any one of the to-go-online CPEs.

With the basic configuration information, the central office device and the CPE may correctly demodulate signals that are in an initialization phase. The basic configuration information may include at least one item shown in Table 1.

**Table 1**

| | |
|---|---|
| Cyclic extension length (CE length) | 10 |
| Quantity of symbols in a TDD frame (Number of symbol periods in TDD frame) | 36 |
| Profile (Profile) | 212 MHz |
| Downstream transmission band (Downstream Transmission band) | All |
| Quantity of downstream symbols (Number of downstream symbol position) | 21 |
| Radio frequency interference bands (RFI bands) | NO |
| Scrambler seed (Scrambler seed) | 11111111111 |
| Downstream robust management channel offset (Downstream RMC offset) | 5 |
| Quantity of symbols sent in a channel discovery 1-1 stage (Duration of Channel Discovery 1-1) | 8192 |
| Identification sequence (IDS) | 11111111 |
| Quantity of SOC symbol repetitions (Number of SOC symbol repetitions) | 8 |
| Quantity of downstream initialization data symbols (Number of DS initialization data symbols) | 111111 |

In Table 1, CE length = cyclic prefix + cyclic suffix - beta. The "beta" represents a window length. The profile is mainly used to limit a frequency band and an amplitude that are of a transmit power spectral density. The quantity of downstream symbols is a quantity of downstream symbols sent in each TDD frame.

The first CPE may obtain the basic configuration information in different manners.

In an example, the basic configuration information may be pre-specified in a protocol, and both the CPE and the central office device may pre-store the basic configuration information. In this case, the first CPE may obtain the basic configuration information by querying the basic configuration information in the first CPE, and the central office device does not need to send a broadcast message. This reduces a process of interaction between the devices.

In another example, the basic configuration information may be provided by the central office device. For example, if the central office device determines the basic configuration information, the central office device may send a third broadcast message, where the third broadcast message is used to indicate the basic configuration information. The first CPE first receives the third broadcast message over a broadcast channel. Because the broadcast channel is modulated by using simplest 4 quadrature amplitude modulation (quadrature amplitude modulation, QAM), a message over the broadcast channel can be demodulated by the to-go-online CPE. In this case, the first CPE may obtain the basic configuration information based on an indication of the third broadcast message.

When the basic configuration information is provided by the central office device, the central office device may send the third broadcast message for a plurality of times, so that all of the to-go-online CPEs can obtain the basic configuration information. A quantity of sending times, a sending occasion, a sending interval, and the like that are of the third broadcast message are not limited in this embodiment of this application.

S42. The first CPE sends a first signal to the central office device, and the central office device receives the first signal from the first CPE. The first CPE indicates, by using a phase change of at least one symbol included in the first signal, whether the first CPE supports the basic configuration information. The central office device may parse the first signal to determine whether the first CPE supports the basic configuration information.

The first signal may also be referred to as a connection setup signal. For example, the first signal is represented as P2MP-startup (startup, SU)-x. The first signal may be a sine signal, and may be modulated in a binary differential phase shift keying (differential phase shift keying, DPSK) mode. In other words, when a digit "1" is modulated, a phase of the signal is inverted by 180°; or when a digit "0" is modulated, a phase of the signal is unchanged. In addition, to ensure robustness, each bit (bit) included in the first signal may be repeatedly sent, for example, may be repeatedly sent for five times or may be repeatedly sent for eight times. A quantity of repeated sending times is not limited in this embodiment of this application.

A subcarrier spacing of the first signal may be a subcarrier spacing specified in the G.994.1 standard, and the subcarrier spacing specified in the G.994.1 standard is 4.3125 kHz. Alternatively, a subcarrier spacing of the first signal may be different from the subcarrier spacing specified in the G.994.1 standard. For example, the subcarrier spacing of the first signal may be equal to a subcarrier spacing, specified in the G.mgfast standard, of a signal in a showtime phase. If the subcarrier spacing of the first signal is equal to 4.3125 kHz, that is, compatible with the G.994.1 standard, the first signal is represented as P2MP-SU-1. Alternatively, if the subcarrier spacing of the first signal is equal to the subcarrier spacing, specified in the G.mgfast standard, of the signal in the showtime phase, the first signal is represented as P2MP-SU-2.

In this embodiment of this application, the P2MP-SU-x signal includes a plurality of symbols, and the first CPE may indicate, by using a phase change of at least one symbol included in the P2MP-SU-x signal, whether the first CPE supports the basic configuration information. The at least one symbol may be some or all of the symbols included in the P2MP-SU-x signal. One manner of a phase change of a symbol is inverting the phase of the symbol, for example, by 180°. For example, for a binary symbol, "0" is inverted to "1", or "1" is inverted to "0".

In the G.994.1 standard, to implement interaction between CPE and a central office device, a connection needs to be set up first. Therefore, there is also a connection setup signal. The connection setup signal specified in the G.994.1 standard is a -40 dBm/Hz sine signal, and phase inversion is performed on symbols included in the sine signal once every 16 ms. In this embodiment of this application, the P2MP-SU-x signal uses a phase change mode different from a phase change mode of the connection setup signal specified in the G.994.1 standard. 1. Phase inversion intervals are different.

In this embodiment of this application, a phase inversion interval of the at least one symbol included in the P2MP-SU-x signal is different from an interval of 16 ms specified in the G.994.1 standard. For example, phase inversion is performed on the at least one symbol included in the P2MP-SU-x signal once every 8 ms or once every 32 ms.

Because the subcarrier spacing of the P2MP-SU-x signal may be greater than 4.3125 kHz, that is, duration of one symbol is shorter, faster phase inversion may be supported. 2. Phase inversion forms are different.

The P2MP-SU-x signal indicates, by using the phase change of the at least one symbol, whether the CPE supports the basic configuration information. Therefore, the P2MP-SU-x signal may indicate that the CPE supports the basic configuration information, or that the CPE does not support the basic configuration information. The P2MP-SU-x signal may indicate the foregoing two cases in different phase inversion forms. To be specific, a phase of the at least one symbol included in the P2MP-SU-x signal may be changed in a first manner or in a second manner. For example, the first manner is a manner of inverting phases according to 0110110..., and the second manner is a manner of inverting phases according to 001001001.... The manner corresponding to 0110110... may mean that, for the at least one symbol included in the P2MP-SU-x signal, a phase is inverted after a first inversion interval, a phase is inverted again after a second inversion interval, a phase is unchanged after a third inversion interval, and so on. Likewise, the manner corresponding to 001001001... may mean that, for the at least one symbol included in the P2MP-SU-x signal, a phase is unchanged after a first inversion interval, a phase is inverted after a second inversion interval, a phase is unchanged after a third inversion interval, and so on.

For example, if the phase of the at least one symbol included in the P2MP-SU-x signal is changed in the first manner, it indicates that the CPE supports the basic configuration information and requests to directly enter the initialization phase. If the phase of the at least one symbol included in the P2MP-SU-x signal is changed in the second manner, it indicates that the CPE does not support the basic configuration information or the CPE may fail to obtain the basic configuration information due to an error during reception of the basic configuration information when the basic configuration information is provided by the central office device, and indicates that the CPE requests to enter a handshake phase that supports a P2MP mode.

It can be ensured, by using the P2MP-SU-x signal provided in this embodiment of this application, that at the beginning of connection setup, the central office device can distinguish whether the CPE expects to go online in a P2P mode or in the P2MP mode. It should be noted that, by using either the P2MP-SU-2 signal or the P2MP-SU-1 signal, during the connection setup, the central office device can distinguish whether the CPE expects to go online in the P2P mode or in the P2MP mode. Compared with the P2MP-SU-1 signal, the P2MP-SU-2 signal has another advantage, that is, during the connection setup, the central office device needs to process only symbols sent at one symbol rate. To be specific, the central office device needs to process only symbols sent at a symbol rate that is the same as a symbol rate, specified in the G.mgfast standard, in a showtime phase. In contrast, because the subcarrier spacing specified in the G.994.1 standard can be used for the P2MP-SU-1 signal, the central office device needs to process symbols of two symbol rates.

In this embodiment of this application, the first CPE sends the first signal to the central office device in different manners. The following describes several manners.

Manner A: The first CPE sends the first signal to the central office device on a first subcarrier, where the first subcarrier is a subcarrier reserved for interaction between a CPE and the central office device in the time division multiplexing mode.

The first subcarrier is a subcarrier specially reserved for a handshake between CPE and the central office device in the P2MP mode. A start frequency of a subcarrier in the showtime phase is a 2.2 MHz. Therefore, for example, a minimum frequency of the first subcarrier is greater than 2.2 MHz, a subcarrier spacing of the first subcarrier is the same as a subcarrier spacing in the showtime phase, and the first subcarrier may include at least one subcarrier.

Once the first subcarrier is defined, the first subcarrier cannot be used in the showtime phase and the initialization phase. In this case, when the central office device receives a signal on the first subcarrier, the central office device may determine that the signal is a connection setup signal in the P2MP mode sent by the CPE. From this perspective, in Manner A, a time in which the first CPE sends the first signal on the first subcarrier may not be limited.

Manner B: The first CPE sends the first signal to the central office device on a second subcarrier in a reserved time period, where the second subcarrier is a subcarrier reserved for a handshake between a CPE and the central office device in a frequency division multiplexing mode.

The second subcarrier may be a subcarrier included in a handshake carrier set specified in the G.994.1 standard.

In the G.994.1 standard, a handshake signal is sent and detected on a corresponding handshake carrier set. As specified in the G.994.1 standard, handshake messages in different Annex modes need to be transmitted on several specified carriers. These carrier sets used for handshakes are referred to as handshake carrier sets. For ease of distinguishing, each carrier set has a specific name, for example, A43 or B43. For details, refer to Table 2.

**Table 2**

| Carrier set name | Upstream carrier set | | | | Downstream carrier set | | | |
|---|---|---|---|---|---|---|---|---|
| | Carrier index | | | Maximum power level/carrier (dBm) | Carrier index | | | Maximum power level/carrier (dBm) |
| A43 | 9 | 17 | 25 | -1.65 | 40 | 56 | 64 | -3.65 |
| A43c | 9 | 17 | 25 | -1.65 | 254 | 293 | 337 | -3.65 |
| B43 | 37 | 45 | 53 | -1.65 | 72 | 88 | 96 | -3.65 |
| B43c | 37 | 45 | 53 | -1.65 | 254 | 293 | 337 | -3.65 |
| C43 | 7 | 9 | | -1.65 | 12 | 14 | 64 | -3.65 |

Handshake carrier sets used in the G.fast standard are A43 and B43, or A43 and A43c. In this case, the second subcarrier may include subcarriers in A43 and/or B43, or include subcarriers in A43 and/or A43c.

In this case, the P2MP-SU-x signal uses a same subcarrier as the G.994.1 standard, and a used subcarrier spacing is 4.3125 kHz. However, a subcarrier spacing of a signal in the showtime phase is not 4.3125 kHz. Two types of signals are mixed, causing a reception difficulty to the central office device. Therefore, the signals need to be separately sent in different times, so that the central office device can detect the signals. Therefore, in this embodiment of this application, the first CPE may send the first signal to the central office device on the second subcarrier in the reserved time period, where the reserved time period may be a time period specially reserved for the handshake in a P2MP mode between the CPE and the central office device. The reserved time period may include a subset of an upstream data transmission time period in at least one time division multiplexing time unit. In other words, the reserved time period may include a part or all of the upstream data transmission time period in the at least one time division multiplexing time unit. The time division multiplexing time unit is, for example, a TDD frame, a TDD slot (slot), or a TDD mini-slot (mini-slot). This is not limited in this embodiment of this application. The reserved time period includes but is not limited to the following several cases. Case a: Parts of upstream data transmission time periods in all time division multiplexing time units are reserved as reserved time periods.

For example, the time division multiplexing time unit is a TDD frame. In Case a, parts of upstream data transmission time periods in all TDD frames are specially reserved for the to-go-online CPE to send a first signal. Duration of a reserved time period in a TDD frame is not limited in this embodiment of this application and duration of reserved time periods in different TDD frames may be the same or different, which may be set based on an actual situation or may be specified in a protocol.

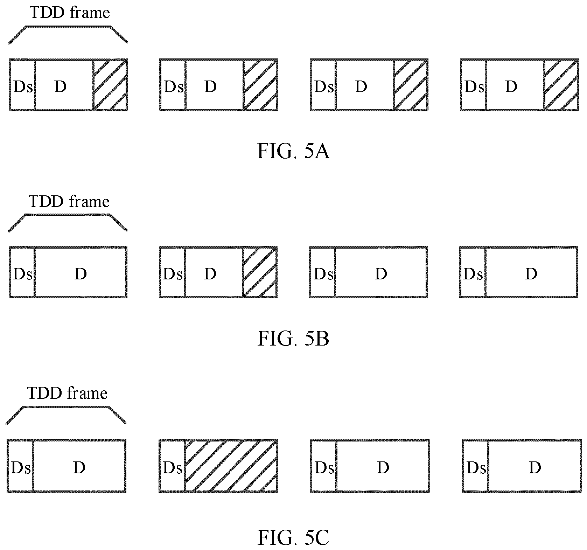

Referring to FIG. 5A, four TDD frames are used as an example. In FIG. 5A, Ds represents downstream transmission, and D represents upstream data. In other words, a time period represented by D is an upstream data transmission time period, and a hatched part represents a reserved time period in the upstream data transmission time period represented by D. It can be learned that, a part of an upstream data transmission time period in each of the TDD frames is reserved as a reserved time period. Certainly, FIG. 5A uses an example in which the reserved time period is located at an end position of the upstream data transmission time period. In actual application, the reserved time period may be located at any position of the upstream data transmission time period. For example, the reserved time period may alternatively be located at a start position, a middle position, or the like of the upstream data transmission time period. However, when the reserved time period is located at the end position of the upstream data transmission time period, preferential sending of the upstream data can be ensured. In addition, positions of reserved time periods in different TDD frames may be the same or different. All these may be set based on an actual situation or may be specified in the protocol.

In this case, information such as a position of the reserved time period in the time division multiplexing time unit may be specified in the protocol or may be notified by the central office device. For example, the central office device sends a second broadcast message, and the to-go-online CPE receives the second broadcast message, where the second broadcast message is used to indicate a reserved time period. After receiving the second broadcast message, the to-go-online CPE may determine information such as a position of the reserved time period. Reserved time periods are set in all time division multiplexing time units. This avoids a case in which the CPE cannot send the first signal because the CPE cannot learn in time a specific time division multiplexing time unit in which a reserved time period is located, and improves a success rate of sending the first signal by the CPE. In addition, when a part of the upstream data transmission time period in the time division multiplexing time unit is set as the reserved time period, the rest of the upstream data transmission time period may still be used to send upstream data, to ensure normal sending of the upstream data.

Case b: Parts of upstream data transmission time periods in some time division multiplexing time units are reserved as reserved time periods.

In other words, parts of upstream data transmission time periods are not reserved in all time division multiplexing time units, but a part of an upstream data transmission time period in one time division multiplexing time unit or parts of upstream data transmission time periods in some time division multiplexing time units is/are specially reserved for the to-go-online CPE to send a first signal.

Referring to FIG. 5B, four TDD frames are used as an example. In FIG. 5B, Ds represents downstream transmission, and D represents upstream data. In other words, a time period represented by D is an upstream data transmission time period, and a hatched part represents a reserved time period in the upstream data transmission time period represented by D. It can be learned that, a part of an upstream data transmission time period in the second TDD frame in the TDD frames is reserved as a reserved time period, while upstream data transmission time periods in other TDD frames each do not have a reserved time period. Certainly, FIG. 5B uses an example in which the reserved time period is located at an end position of the upstream data transmission time period. In actual application, the reserved time period may be located at any position of the upstream data transmission time period. For example, the reserved time period may alternatively be located at a start position, a middle position, or the like of the upstream data transmission time period. In addition, if upstream data transmission time periods in a plurality of TDD frames each have a reserved time period, positions of the reserved time periods in the different TDD frames may be the same or different, which may be set based on an actual situation or may be specified in the protocol.

In this case, the reserved time period may occur regularly or may be randomly specified by the central office device based on a current service. If the reserved time period occurs regularly, the reserved time period may be specified in the protocol or may be notified by the central office device; or if the reserved time period is randomly specified by the central office device based on the current service, the reserved time period is notified by the central office device. When the reserved time period is notified by the central office device, the central office device may send a second broadcast message over a broadcast channel, and the to-go-online CPE receives the second broadcast message, where the second broadcast message is used to indicate the reserved time period. After receiving the second broadcast message, the to-go-online CPE may determine information such as specific time division multiplexing time units in which reserved time periods are located and positions of the reserved time periods in the time division multiplexing time units.

Optionally, to avoid a case in which the to-go-online CPE misses the reserved time period because the to-go-online CPE does not receive the second broadcast message in time, the central office device may start to send the second broadcast message much earlier, and the second broadcast message may be sent only once or may be sent for a plurality of times. For example, the central office device starts to send the second broadcast message a plurality of TDD frames earlier and once in each TDD frame or once every several TDD frames. For example, the central office device may start to send the second broadcast message in 10 TDD frames before a TDD frame in which the reserved time period is located, and the second broadcast message may be sent only once or may be sent once in each of the 10 TDD frames. In addition, if the second broadcast message is sent once in each TDD frame, when sending the second broadcast message, the central office device may further add a countdown timer to the second broadcast message. An initial value of the countdown timer is a difference between a number of a TDD frame in which the second broadcast message is sent for the first time and a number of a TDD frame in which a first reserved time period is located after the TDD frame, and the central office device subtracts 1 from a value of the countdown timer every time the second broadcast message is sent in a TDD frame after the TDD frame in which the second broadcast message is sent for the first time.

For example, the central office device may start to send the second broadcast message in the 10 TDD frames before the TDD frame in which the reserved time period is located, the second broadcast message indicates that the reserved time period is located in an n^{th} TDD frame, and the initial value of the countdown timer carried in the second broadcast message is 10. The central office device continues to broadcast the second broadcast message in each subsequent TDD frame, and in each second broadcast message, a value of the countdown timer is obtained by subtracting 1 from a value of a countdown timer in a previous second broadcast message. In this case, a TDD frame whose countdown timer has a value of 0 is the TDD frame that has the reserved time period. In this manner, the to-go-online CPE can accurately learn a specific TDD frame that has a reserved time period, so that the first signal can be sent at a correct time. Reserved time periods are set in some time division multiplexing time units. This can not only ensure that the CPE can send the first signal to the central office device, but also ensure a normal exchange process of other information.

Case c: Upstream data transmission time periods in some time division multiplexing time units are used as reserved time periods.

A difference between Case c and Case b is that, upstream data transmission time periods in some time division multiplexing time units are used as reserved time periods in Case c, while parts of upstream data transmission time periods in some time division multiplexing time units are used as reserved time periods in Case b. Case c is more applicable to a case in which a service is not busy or a time for sending a connection setup signal is required to be relatively long.

The foregoing describes several cases of the reserved time period. In actual application, different cases may be selected, or a specific case to be used may be defined in the protocol.

Referring to FIG. 5C, four TDD frames are used as an example. In FIG. 5C, Ds represents downstream transmission, and D represents upstream data. In other words, a time period represented by D is an upstream data transmission time period, and a hatched part represents a reserved time period in the upstream data transmission time period represented by D. It can be learned that, an upstream data transmission time period in the second TDD frame in the TDD frames is used as a reserved time period, while upstream data transmission time periods in other TDD frames each do not have a reserved time period.

Likewise, the reserved time period may be specified in the protocol or may be notified by the central office device. For a notification manner of the central office device, refer to the description in Case b. Details are not described again.

The first CPE occupies the second subcarrier in the reserved time period to send the first signal to the central office device. Therefore, a conflict between the first signal and a signal in P2P can be avoided. In addition, a subcarrier specified in the G.994.1 standard can be reused, and there is no need to additionally define a new subcarrier, so that resource utilization can be improved.

Manner C: The first CPE sends the first signal to the central office device on a first subcarrier in a reserved time period, where the first subcarrier is a subcarrier reserved for interaction between a CPE and the central office device in the time division multiplexing mode.

For a description of the first subcarrier, refer to Manner A.

Similarly, the first signal is sent to the central office device on the first subcarrier. A difference from Manner A is that, a reserved time period may be set, and the first CPE may choose to send the first signal to the central office device in the reserved time period. In this case, the first subcarrier may have another use in a time period other than the reserved time period, so that resource utilization can be improved. For the reserved time period, refer to the related description in Manner B. Details are not described again.

Upstream data transmission time periods in time division multiplexing time units are set as reserved time periods, so that it can be ensured that there is a relatively sufficient time for the CPE to send the first signal. This improves a success rate of sending the first signal by the CPE. The foregoing describes several manners in which the first CPE sends the first signal to the central office device. In actual application, different manners may be selected, or a specific manner to be used may be defined in the protocol.

After receiving the first signal, the central office device may determine, based on a phase change form of the first signal, whether the first CPE supports the basic configuration information, and may determine a request of the first CPE. For example, when a phase of the at least one symbol included in the first signal is changed in the foregoing first manner, the central office device determines that the first CPE supports the basic configuration information and the first CPE requests to enter the initialization phase; or when a phase of the at least one symbol included in the first signal is changed in the foregoing second manner, the central office device determines that the first CPE does not support the basic configuration information and the first CPE requests to enter the handshake phase in the P2MP mode.

The method may further include the following steps.

S43. If the central office device determines that the phase of the at least one symbol included in the first signal is changed in the foregoing first manner, the central office device may set a time division multiplexing time unit dedicated for information exchange in the initialization phase with the first CPE, for example, the central office device may perform information exchange in the initialization phase with the first CPE in a first time division multiplexing time unit.

In the initialization phase, the central office device and the first CPE may measure a signal-to-noise ratio (SNR), to determine a bit loading table (bit loading table). In addition, the central office device and the first CPE may further train frequency domain equalization coefficients, and further train crosstalk cancellation coefficients by using a synchronization symbol (sync symbol), to ensure that the central office device and the first CPE can stably transmit data after entering the showtime phase. Certainly, in the initialization phase, the central office device and the first CPE may further perform other work. This is not limited in this embodiment of this application.

The first time division multiplexing time unit may be a time division multiplexing time unit that does not include a reserved time period. Alternatively, the first time division multiplexing time unit may be a time division multiplexing time unit that includes a reserved time period, and the reserved time period in the first time division multiplexing time unit occupies only a part of an upstream data transmission time period in the first time division multiplexing time unit. When the central office device performs the information exchange in the initialization phase with the first CPE in the first time division multiplexing time unit, the exchange is performed in the rest, not set as the reserved time period, of the upstream data transmission time period in the first time division multiplexing time unit. To enable the first CPE to interact with the central office device in the first time division multiplexing time unit, the central office device first needs to notify the first CPE. For example, the central office device may send a first broadcast message, and the first CPE may receive the first broadcast message, where the first broadcast message is used to indicate the first time division multiplexing time unit, for example, indicate information such as a position of the first time division multiplexing time unit. In this case, the first CPE may determine the first time division multiplexing time unit based on the first broadcast message, to perform the information exchange in the initialization phase with the central office device in the first time division multiplexing time unit.

S44. If the central office device determines that the phase of the at least one symbol included in the first signal is changed in the foregoing second manner, the central office device may set a time division multiplexing time unit dedicated for information exchange in the handshake phase in the P2MP mode with the first CPE, for example, the central office device may perform information exchange in the handshake phase with the first CPE in a second time division multiplexing time unit.

In the handshake phase, the central office device and the first CPE may re-exchange the basic configuration information shown in Table 1, for example, including a to-be-used profile, a CE length, or the like. Based on these pieces of information, the central office device and the CPE can correctly demodulate signals that are sent in the initialization phase. Certainly, in the handshake phase, the central office device and the first CPE may further perform other work. This is not limited in this embodiment of this application.

The second time division multiplexing time unit may be a time division multiplexing time unit that does not include a reserved time period. Alternatively, the second time division multiplexing time unit may be a time division multiplexing time unit that includes a reserved time period, and the reserved time period in the second time division multiplexing time unit occupies only a part of an upstream data transmission time period in the second time division multiplexing time unit. When the central office device performs the information exchange in the handshake phase with the first CPE in the second time division multiplexing time unit, the exchange is performed in the rest, not set as the reserved time period, of the upstream data transmission time period in the second time division multiplexing time unit. To enable the first CPE to interact with the central office device in the second time division multiplexing time unit, the central office device first needs to notify the first CPE. For example, the central office device may send a first broadcast message, and the first CPE may receive the first broadcast message, where the first broadcast message is used to indicate the second time division multiplexing time unit, for example, indicate information such as a position of the second time division multiplexing time unit. In this case, the first CPE may determine the second time division multiplexing time unit based on the first broadcast message, to perform the information exchange in the handshake phase with the central office device in the second time division multiplexing time unit. In other words, the first broadcast message in this embodiment of this application may be used to indicate the first time division multiplexing time unit or the second time division multiplexing time unit.

S43 and S44 are optional steps.

In addition, as described in this embodiment of this application, at least one of the plurality of CPEs connected to the central office device is in the showtime state, that is, the central office device is also in the showtime state. In this case, when the central office device is in the silent state, the central office device can enter the showtime state only by performing a handshake with the at least one of the plurality of CPEs connected to the central office device. In this embodiment of this application, the central office device may enter the showtime state by using the communication method provided in this embodiment of this application. To be specific, to-go-online CPEs all perform handshakes and interaction with the central office device by using the communication method provided in this embodiment of this application. Alternatively, the CPE may monitor a state of the central office device. When the central office device is in the silent state, the to-go-online CPE may continue to use a manner in the prior art, namely, a P2P manner specified in the G.994.1 standard to perform a handshake with the central office device. In this case, the central office device enters the showtime state by performing a P2P handshake with one CPE, and the to-go-online CPE determines, through monitoring, that the central office device enters the showtime state. The to-go-online CPE performs a P2MP handshake and interaction with the central office device by using the communication method provided in this embodiment of this application. Therefore, the G.994.1 standard can be used, or the P2MP solution provided in this embodiment of this application can be used. This is relatively flexible. The following describes a device provided in the embodiments of this application with reference to the accompanying drawings.

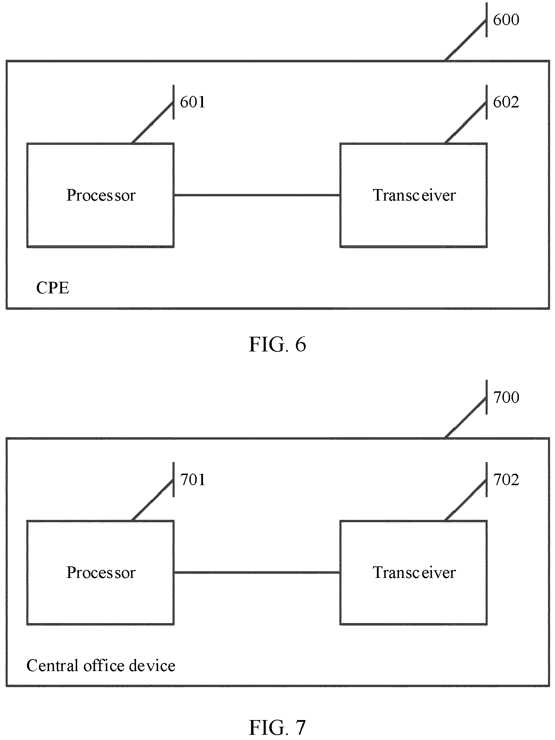

FIG. 6 is a schematic structural diagram of CPE 600. The CPE 600 may implement functions of the first CPE described above. The CPE 600 may be the first CPE described above, or may be a chip disposed in the first CPE described above. The CPE 600 may include a processor 601 and a transceiver 602. The processor 601 may be configured to perform S41, S43, and S44 in the embodiment shown in FIG. 4, and/or support another process of the technology described in this specification. The transceiver 602 may be configured to perform S41, S42, S43, and S44 in the embodiment shown in FIG. 4, and/or support another process of the technology described in this specification. That the transceiver 602 performs S41 mainly means that the transceiver 602 receives basic configuration information from a central office device, and the processor 601 obtains the basic configuration information received by the transceiver 602.

For example, the processor 601 is configured to obtain the basic configuration information. The transceiver 602 is configured to send a first signal to the central office device, where the CPE 600 indicates, by using a phase change of at least one symbol included in the first signal, whether the CPE 600 supports the basic configuration information.

All related content of the steps in the foregoing method embodiment may be cited in function descriptions of corresponding functional modules. Details are not described herein.

FIG. 7 is a schematic structural diagram of a central office device 700. The central office device 700 may implement functions of the central office device described above. The central office device 700 may be the central office device described above, or may be a chip disposed in the central office device described above. The central office device 700 may include a processor 701 and a transceiver 702. The processor 701 may be configured to perform S43 and S44 in the embodiment shown in FIG. 4, and/or support another process of the technology described in this specification. The transceiver 702 may be configured to perform S41, S42, S43, and S44 in the embodiment shown in FIG. 4, and/or support another process of the technology described in this specification. That the transceiver 702 performs S41 mainly means that the transceiver 702 sends basic configuration information to first CPE.

For example, the transceiver 702 is configured to receive a first signal from the first CPE. The processor 701 is configured to determine, based on a phase change of at least one symbol included in the first signal, whether the first CPE supports the basic configuration information, where the first CPE is CPE in the plurality of CPEs that requests to go online.

All related content of the steps in the foregoing method embodiment may be cited in function descriptions of corresponding functional modules. Details are not described herein.

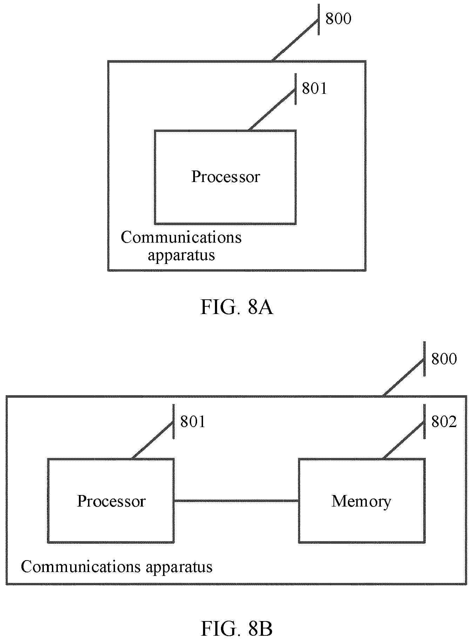

In a simple embodiment, a person skilled in the art may figure out that the CPE 600 or the central office device 700 may be further implemented by using a structure of a communications apparatus 800 shown in FIG. 8A. The communications apparatus 800 may implement functions of the first CPE or the central office device described above. The communications apparatus 800 may include a processor 801. When the communications apparatus 800 is configured to implement the functions of the first CPE in the embodiment shown in FIG. 4, the processor 801 may be configured to perform S41, S43, and S44 in the embodiment shown in FIG. 4, and/or support another process of the technology described in this specification. When the communications apparatus 800 is configured to implement the functions of the central office device in the embodiment shown in FIG. 4, the processor 801 may be configured to perform S43 and S44 in the embodiment shown in FIG. 4, and/or support another process of the technology described in this specification.

The communications apparatus 800 may be implemented by using a field-programmable gate array (field-programmable gate array, FPGA), an application-specific integrated circuit (application specific integrated circuit, ASIC), a system on chip (system on chip, SoC), a central processor unit (central processor unit, CPU), a network processor (network processor, NP), a digital signal processing circuit (digital signal processor, DSP), a micro controller unit (micro controller unit, MCU), or a programmable controller (programmable logic device, PLD) or another integrated chip. In this case, the communications apparatus 600 may be disposed in the network device or the terminal device in the embodiments of this application, so that the network device or the terminal device implements the signal sending and receiving methods provided in the embodiments of this application.

In an optional implementation, referring to FIG. 8B, the communications apparatus 800 may further include a memory 802. The memory 802 is configured to store computer programs or instructions, and the processor 801 is configured to decode and execute these computer programs or instructions. It should be understood that, these computer programs or instructions may include function programs of the foregoing first CPE or the foregoing central office device. When the function programs of the first CPE are decoded and executed by the processor 801, the first CPE is enabled to implement the functions of the first CPE in the communication method in the embodiments of this application. When the function programs of the central office device are decoded and executed by the processor 801, the central office device is enabled to implement the functions of the central office device in the communication method in the embodiments of this application.

In another optional implementation, the function programs of the first CPE or the central office device are stored in an external memory of the communications apparatus 800. When the function programs of the first CPE are decoded and executed by the processor 801, the memory 802 temporarily stores some or all content of the function programs of the first CPE. When the function programs of the central office device are decoded and executed by the processor 801, the memory 802 temporarily stores some or all content of the function programs of the central office device.

In another optional implementation, the function programs of the first CPE or the central office device are set to be stored in the memory 802 inside the communications apparatus 800. When the function programs of the first CPE are stored in the memory 802 inside the communications apparatus 800, the communications apparatus 800 may be disposed in the first CPE in the embodiments of this application. When the function programs of the central office device are stored in the memory 802 inside the communications apparatus 800, the communications apparatus 800 may be disposed in the central office device in the embodiments of this application.

In still another optional implementation, some content of the function programs of the first CPE is stored in an external memory of the communications apparatus 800, and other content of the function programs of the first CPE is stored in the memory 802 inside the communications apparatus 800; or some content of the function programs of the central office device is stored in an external memory of the communications apparatus 800, and other content of the function programs of the central office device is stored in the memory 802 inside the communications apparatus 800.

In the embodiments of this application, the CPE 600, the central office device 700, and the communications apparatus 800 are presented in a form in which each functional module is obtained through division based on each corresponding function, or may be presented in a form in which each functional module is obtained through division in an integrated manner. The "module" herein may be an ASIC, a processor that executes one or more software or firmware programs, a memory, an integrated logic circuit, and/or another component that can provide the foregoing functions.

In addition, the CPE 600 provided in the embodiment shown in FIG. 6 may alternatively be implemented in another form. For example, the CPE includes a processing module and a transceiver module. For example, the processing module may be implemented by using the processor 601, and the transceiver module may be implemented by using the transceiver 602. The processing module may be configured to perform S41, S43, and S44 in the embodiment shown in FIG. 4, and/or support another process of the technology described in this specification. The transceiver module may be configured to perform S41, S42, S43, and S44 in the embodiment shown in FIG. 4, and/or support another process of the technology described in this specification. That the transceiver module performs S41 mainly means that the transceiver module receives basic configuration information from a central office device, and the processor module obtains the basic configuration information received by the transceiver module.

For example, the processor module is configured to obtain the basic configuration information. The transceiver module is configured to send a first signal to the central office device, where the CPE 600 indicates, by using a phase change of at least one symbol included in the first signal, whether the CPE 600 supports the basic configuration information.

All related content of the steps in the foregoing method embodiment may be cited in function descriptions of corresponding functional modules. Details are not described herein.

The central office device 700 provided in the embodiment shown in FIG. 7 may alternatively be implemented in another form. For example, the central office device includes a processing module and a transceiver module. For example, the processing module may be implemented by using the processor 701, and the transceiver module may be implemented by using the transceiver 702. The processing module may be configured to perform S43 and S44 in the embodiment shown in FIG. 4, and/or support another process of the technology described in this specification. The transceiver module may be configured to perform S41, S42, S43, and S44 in the embodiment shown in FIG. 4, and/or support another process of the technology described in this specification. That the transceiver module performs S41 mainly means that the transceiver module sends basic configuration information to first CPE.

For example, the transceiver module is configured to receive a first signal from the first CPE. The processing module is configured to determine, based on a phase change of at least one symbol included in the first signal, whether the first CPE supports the basic configuration information, where the first CPE is CPE in a plurality of CPEs that requests to go online.

All related content of the steps in the foregoing method embodiment may be cited in function descriptions of corresponding functional modules. Details are not described herein.

The CPE 600, the central office device 700, and the communications apparatus 800 provided in the embodiments of this application may be configured to perform the method provided in the embodiment shown in the FIG. 4. Therefore, for technical effects that can be achieved by the CPE 600, the central office device 700, and the communications apparatus 800, refer to the foregoing method embodiment. Details are not described herein.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD), a semiconductor medium (for example, a solid-state drive (solid state disk, SSD)), or the like.

It is clear that, a person skilled in the art can make various modifications and variations to embodiments of this application without departing from the spirit and scope of this application. This application is intended to cover these modifications and variations provided that they fall within the scope of protection defined by the following claims and their equivalent technologies.

## Claims

1. A communication method, applied to a communications network, wherein the communications network comprises a central office device, a user node, and a plurality of customer premises equipments CPEs, the central office device is connected to the user node by using a twisted pair, the user node is connected to the plurality of CPEs, at least one of the plurality of CPEs is in a data transmission showtime state, and the at least one CPE in the showtime state communicates with the central office device in a time division multiplexing mode; and the method comprises:
obtaining, by first CPE, basic configuration information, wherein the first CPE is one of the plurality of CPEs, and the first CPE is in a silent state; and
sending, by the first CPE, a first signal to the central office device, wherein the first CPE indicates, by using a phase change of at least one symbol comprised in the first signal, whether the first CPE supports the basic configuration information.

2. The method according to claim 1, wherein
when a phase of the at least one symbol comprised in the first signal is changed in a first manner, the first signal is used to indicate that the first CPE supports the basic configuration information, and is used to indicate that the first CPE requests to enter an initialization phase; or
when a phase of the at least one symbol comprised in the first signal is changed in a second manner, the first signal is used to indicate that the first CPE does not support the basic configuration information, and is used to indicate that the first CPE requests to enter a handshake phase.

3. The method according to claim 2, wherein
when the phase of the at least one symbol comprised in the first signal is changed in the first manner, the method further comprises:
performing, by the first CPE, information exchange in the initialization phase with the central office device in a first time division multiplexing time unit; or
when the phase of the at least one symbol comprised in the first signal is changed in the second manner, the method further comprises:
performing, by the first CPE, information exchange in the handshake phase with the central office device in a second time division multiplexing time unit.

4. The method according to claim 3, wherein the method further comprises:
receiving, by the first CPE, a first broadcast message from the central office device, wherein the first broadcast message is used to indicate the first time division multiplexing time unit or the second time division multiplexing time unit.

5. The method according to any one of claims 1 to 4, wherein the sending, by the first CPE, a first signal to the central office device comprises:
sending, by the first CPE, the first signal to the central office device on a first subcarrier, wherein the first subcarrier is a subcarrier reserved for interaction between a CPE and the central office device in the time division multiplexing mode; or
sending, by the first CPE, the first signal to the central office device on a first subcarrier in a reserved time period, wherein the first subcarrier is a subcarrier reserved for interaction between a CPE and the central office device in the time division multiplexing mode; or
sending, by the first CPE, the first signal to the central office device on a second subcarrier in a reserved time period, wherein the second subcarrier is a subcarrier reserved for a handshake between a CPE and the central office device in a frequency division multiplexing mode.

6. The method according to claim 5, wherein
the reserved time period comprises a subset of an upstream data transmission time period in at least one time division multiplexing time unit.

7. A communication method, applied to a communications network, wherein the communications network comprises a central office device, a user node, and a plurality of customer premises equipments CPEs, the central office device is connected to the user node by using a twisted pair, the user node is connected to the plurality of CPEs, the plurality of CPEs communicate with the central office device in a time division multiplexing mode, and the central office device is in a data transmission showtime state; and the method comprises:
receiving, by the central office device, a first signal from first CPE, wherein a phase change of at least one symbol comprised in the first signal indicates whether the first CPE supports basic configuration information, and the first CPE is CPE in the plurality of CPEs that requests to go online.

8. The method according to claim 7, wherein
when a phase of the at least one symbol comprised in the first signal is changed in a first manner, the first signal is used to indicate that the first CPE supports the basic configuration information, and is used to indicate that the first CPE requests to enter an initialization phase; or
when a phase of the at least one symbol comprised in the first signal is changed in a second manner, the first signal is used to indicate that the first CPE does not support the basic configuration information, and is used to indicate that the first CPE requests to enter a handshake phase.

9. The method according to claim 8, wherein
when the phase of the at least one symbol comprised in the first signal is changed in the first manner, the method further comprises:
performing, by the central office device, information exchange in the initialization phase with the first CPE in a first time division multiplexing time unit; or
when the phase of the at least one symbol comprised in the first signal is changed in the second manner, the method further comprises:
performing, by the central office device, information exchange in the handshake phase with the first CPE in a second time division multiplexing time unit.

10. The method according to claim 9, wherein the method further comprises:
sending, by the central office device, a first broadcast message, wherein the first broadcast message is used to indicate the first time division multiplexing time unit or the second time division multiplexing time unit.

11. The method according to any one of claims 7 to 10, wherein the receiving, by the central office device, a first signal from first CPE comprises:
receiving, by the central office device, the first signal from the central office device on a first subcarrier, wherein the first subcarrier is a subcarrier reserved for interaction between a CPE and the central office device in the time division multiplexing mode; or
receiving, by the central office device, the first signal from the first CPE on a first subcarrier in a reserved time period, wherein the first subcarrier is a subcarrier reserved for interaction between a CPE and the central office device in the time division multiplexing mode; or
receiving, by the central office device, the first signal from the first CPE on a second subcarrier in a reserved time period, wherein the second subcarrier is a subcarrier reserved for a handshake between a CPE and the central office device in a frequency division multiplexing mode.

12. The method according to claim 11, wherein
the reserved time period comprises a subset of an upstream data transmission time period in at least one time division multiplexing time unit.

13. A customer premises equipment CPE, wherein the CPE is in a communications network, the communications network comprises a central office device, a user node, and a plurality of CPEs, the central office device is connected to the user node by using a twisted pair, the user node is connected to the plurality of CPEs, at least one of the plurality of CPEs is in a data transmission showtime state, the at least one CPE in the showtime state communicates with the central office device in a time division multiplexing mode, the CPE is one of the plurality of CPEs, and the CPE is in a silent state; and the CPE comprises:
a processing module, configured to obtain basic configuration information; and
a transceiver module, configured to send a first signal to the central office device, wherein the CPE indicates, by using a phase change of at least one symbol comprised in the first signal, whether the CPE supports the basic configuration information.

14. The CPE according to claim 13, wherein
when a phase of the at least one symbol comprised in the first signal is changed in a first manner, the first signal is used to indicate that the first CPE supports the basic configuration information, and is used to indicate that the first CPE requests to enter an initialization phase; or
when a phase of the at least one symbol comprised in the first signal is changed in a second manner, the first signal is used to indicate that the first CPE does not support the basic configuration information, and is used to indicate that the first CPE requests to enter a handshake phase.

15. The CPE according to claim 14, wherein
when the phase of the at least one symbol comprised in the first signal is changed in the first manner, the processing module is further configured to perform information exchange in the initialization phase with the central office device in a first time division multiplexing time unit; or
when the phase of the at least one symbol comprised in the first signal is changed in the second manner, the processing module is further configured to perform information exchange in the handshake phase with the central office device in a second time division multiplexing time unit.

16. The CPE according to claim 15, wherein the transceiver module is further configured to:
receive a first broadcast message from the central office device, wherein the first broadcast message is used to indicate the first time division multiplexing time unit or the second time division multiplexing time unit.

17. The CPE according to any one of claims 13 to 16, wherein the transceiver module is configured to:
send the first signal to the central office device on a first subcarrier, wherein the first subcarrier is a subcarrier reserved for interaction between a CPE and the central office device in the time division multiplexing mode; or
send the first signal to the central office device on a first subcarrier in a reserved time period, wherein the first subcarrier is a subcarrier reserved for interaction between a CPE and the central office device in the time division multiplexing mode; or
send the first signal to the central office device on a second subcarrier in a reserved time period, wherein the second subcarrier is a subcarrier reserved for a handshake between a CPE and the central office device in a frequency division multiplexing mode.

18. A central office device, wherein the central office device is in a communications network, the communications network comprises the central office device, a user node, and a plurality of customer premises equipments CPEs, the central office device is connected to the user node by using a twisted pair, the user node is connected to the plurality of CPEs, the plurality of CPEs communicate with the central office device in a time division multiplexing mode, and the central office device is in a data transmission showtime state; and the central office device comprises:
a transceiver module, configured to receive a first signal from first CPE; and
a processing module, configured to determine, based on a phase change of at least one symbol comprised in the first signal, whether the first CPE supports basic configuration information, wherein the first CPE is CPE in the plurality of CPEs that requests to go online.

19. The central office device according to claim 18, wherein
when a phase of the at least one symbol comprised in the first signal is changed in a first manner, the first signal is used to indicate that the first CPE supports the basic configuration information, and is used to indicate that the first CPE requests to enter an initialization phase; or
when a phase of the at least one symbol comprised in the first signal is changed in a second manner, the first signal is used to indicate that the first CPE does not support the basic configuration information, and is used to indicate that the first CPE requests to enter a handshake phase.

20. The central office device according to claim 19, wherein
when the phase of the at least one symbol comprised in the first signal is changed in the first manner, the processing module performs information exchange in the initialization phase with the first CPE in a first time division multiplexing time unit; or
when the phase of the at least one symbol comprised in the first signal is changed in the second manner, the processing module performs information exchange in the handshake phase with the first CPE in a second time division multiplexing time unit.

21. The central office device according to claim 20, wherein the transceiver module is further configured to:
send a first broadcast message, wherein the first broadcast message is used to indicate the first time division multiplexing time unit or the second time division multiplexing time unit.

22. The central office device according to any one of claims 18 to 21, wherein the transceiver module is configured to:
receive the first signal from the central office device on a first subcarrier, wherein the first subcarrier is a subcarrier reserved for interaction between the CPE and the central office device in the time division multiplexing mode; or
receive the first signal from the first CPE on a first subcarrier in a reserved time period, wherein the first subcarrier is a subcarrier reserved for interaction between a CPE and the central office device in the time division multiplexing mode; or
receive the first signal from the first CPE on a second subcarrier in a reserved time period, wherein the second subcarrier is a subcarrier reserved for a handshake between a CPE and the central office device in a frequency division multiplexing mode.

23. A communications system, comprising a central office device, a user node, and a plurality of customer premises equipments CPEs, wherein the central office device is connected to the user node by using a twisted pair, the user node is connected to of the plurality of CPEs, at least one of the plurality of CPEs is in a data transmission showtime state, the at least one CPE in the showtime state communicates with the central office device in a time division multiplexing mode, and the central office device is in the data transmission showtime state; wherein
first CPE is configured to obtain basic configuration information and send a first signal to the central office device, the first CPE indicates, by using a phase change of at least one symbol comprised in the first signal, whether the first CPE supports the basic configuration information, the first CPE is one of the plurality of CPEs, and the first CPE is in a silent state; and
the central office device is configured to receive the first signal from the first CPE.
